# EUROPEAN PATENT APPLICATION

(11) **EP 1 248 474 A1**
(43) Date of publication of application: **09.10.2002**
(21) Application number: 02076238.1
(22) Date of filing: 27.03.2002
(51) Int. Cl.: H04N 17/00, H04N 7/173

(54) **Cable system comprising a test facility and interference detection**

(30) Priority: 02.04.2001 NL 1017758
(71) Applicant: ROAX B.V., NL-3703 BR Zeist (NL); IVA International B.V., 3443 BT Woerden (NL)
(72) Inventor: Skutta, Hans, 3443 BT Woerden (NL)
(74) Representative: Hooiveld, Arjen Jan Winfried

(57) **Abstract**

There is disclosed a cable system which comprises a local network installed in a living/working unit and to a cable terminal unit for use in said cable system, wherein the cable system furthermore comprises means for supplying a recognisable test signal to the local network, as well as detection means for detecting interference signals generated by the local network in response to said recognisable test signal. Measurement of interference signals may take place individually for each living/working unit, and the level of the signals occurring in the local network may be reduced, if desired, which will lead to lower-level interference signals.

## Description

The present invention relates to a cable system comprising a local network installed in a living/working unit and to a cable terminal unit for use in said cable system.

The present invention furthermore relates to a method of detecting interference signals emitted by a cable system of a living/working unit.

Such cable systems are generally known. In particular so-called Hybrid Fibre Coax (HFC) systems can be considered in this connection, in which information is transmitted from a primary station, also called Head-End (HE) to terminal units, usually several terminal units, over a wide-band bidirectional communication channel. Said terminal units form cable terminal units, which are currently present in practically every housing unit or office unit. The HE is capable of transmitting a (usually continuous) information flow in the form of a high-frequency data signal to the NT's over said bidirectional communication channel. The data signal contains for example TV signals, video and/or sound data signals or other data signals having a high bit rate. Apart from, for example, TV and/or video equipment, current living/working units also comprise local communication structures or networks connected to the NT's, including, among other things, one or more computers, cable modems, Ethernet or ISDN equipment, set-top boxes and means of communication, such as telephones, faxes and the like. The NT's in turn are capable of effecting upstream data communication to the HE via the bidirectional channel. In case of upstream data communication data signals are modulated onto carrier signals, the frequency thereof being normally situated on the underside of the available frequency band. For US systems, the available upstream frequency band usually ranges from 5-42 MHz, and for European systems it ranges from 5-65 MHz.

In practice it has become apparent that the presence of a constantly increasing amount of local connections, extensions and networks, in particular in living/working units, leads to an increased level of interference signals. Such interference signals not only cause communication problems between neighbouring living/working units which do not stand far apart, but they also disturb the (likewise increasing) communication in air traffic, for example, even constituting a possible danger for said air traffic, and the increasingly sophisticated and sensitive electrical equipment that is used for that purpose, such as communication equipment, positioning and navigation equipment, or the equipment used in the radio telephone traffic of inter alia the police, fire brigades, ambulances and the like.

Consequently, it is an object of the present invention to determine in the first instance in a simple yet efficient manner whether any interference signals sources are present in the living and/or working environment.

In order to accomplish that objective, the cable system according to the invention is characterized in that the cable system furthermore comprises means for supplying a recognisable test signal to the local network, as well as detection means for detecting interference signals generated by the local network in response to said recognisable test signal.

The advantage of the cable system according to the invention is that it is thus possible to determine whether any interference signals sources are present in the local network that is installed in a living/working unit. Depending on the strength of the recognisable test signal detected by said detection means, it is moreover possible to determine the strength of said sources, and to issue a warning to the occupant in question if a prescribed allowable or legal interference level is being exceeded. The installation of such a system in several living/working units, for example in interference-prone areas, creates possibilities of improving the wireless communication, for example in the case of radio telephone traffic or air traffic, which is conducive to safety and public order. Since the system according to the invention enables easy identification and mapping of the interference sources, a number of specific measures can be taken for each individual region or district, if necessary, so as to reduce the usually unknown and unintended nuisance caused by the increased interference levels to a minimum, in particular a legally prescribed minimum. It is noted in this connection that it should be considered that quite a few cases of interference can be traced back to non-linear effects which occur in the local network and which cause higher harmonics of the frequency components in the available band to give rise to interfering signals in, for example, frequency bands that are essential to air traffic. With the system according to the invention, however, it is possible, for example, to detect interference sources that are caused by poor screen damping, in which connection incorrectly or incompletely screened connections of, for example, cables to connectors should be considered.

In accordance with one embodiment of the invention, the test signal supplying means and/or the detection means are preferably arranged in the living/working units.
The advantage of this arrangement is that it is possible to determine specifically for each individual living/working unit whether interference signals are leaking out of the local network, and if that is the case, to determine the height of the interference level.

Another embodiment of the cable system according to the invention is characterized in that the cable system comprises a cable terminal unit (NT) which terminates in the living/working unit, to which the test signal supplying means and/or the detection means are connected and, more preferably, disposed in the vicinity thereof.
Advantageous is the fact that in this way a certain degree of uniformity is achieved as regards the manner of carrying out test signal measurement, and in particular as regards the position of the detection means, which are usually centrally arranged in a meter cupboard.

Another embodiment of the cable system according to the invention is characterized in that the cable system comprises switching means connected to the test signal supplying means for switching on the test signal supplying means at desired points in time.
Especially if the living units stand close together it is advantageous to have such switching means available, so that the test signal measurements carried out for each individual living/working unit will not affect each other. This can be achieved by slightly varying the points in time at which the measurements are carried out with each individual living/working unit. This can take place centrally from a district or region test measurement control unit, for example, or by providing local switching means that activate themselves at random points in time.

Yet another embodiment of the cable system according to the invention is characterized in that the cable system comprises control means connected to one or more controllable amplifiers incorporated in the local network, which function to influence signal levels that occur in the local network.

In principle, the signal level of the signal presented to the end user is set at the lowest possible level. If the end user has installed antenna amplifiers in his house, however, the interference level may become undesirably high, in which case this can not only be detected, but in which case it also becomes possible to set the attenuation of any attenuating amplifiers or filtering amplifiers, or filters, such that an acceptable interference level will not be exceeded. Poor screen damping resulting from, for example, the presence of bad or loose connectors or screw clamps is the probable cause in that case, which can be investigated more closely.

The present invention furthermore relates to a method of detecting interference signals in a cable system of a living/working unit, which is characterized in that a recognisable test signal is put on the cable system, and in that interference signals generated by the local network in response to said recognisable test signal are detected.
The advantages that are achieved therewith have already been explained in the foregoing.

The further advantages of the embodiments defined in the dependent claims will be explained hereinafter.

The present invention will now be explained in more detail with reference to the accompanying drawing, in the figures of which like parts are indicated by the same numerals. In the figures:
Figure 1 is a schematic representation of a communication system in which the cable system comprising the cable terminal units according to the invention can be used; and
Figure 2 is a strongly simplified, schematic representation of possible embodiments of a cable terminal unit according to the invention for use in the system of Figure 1.

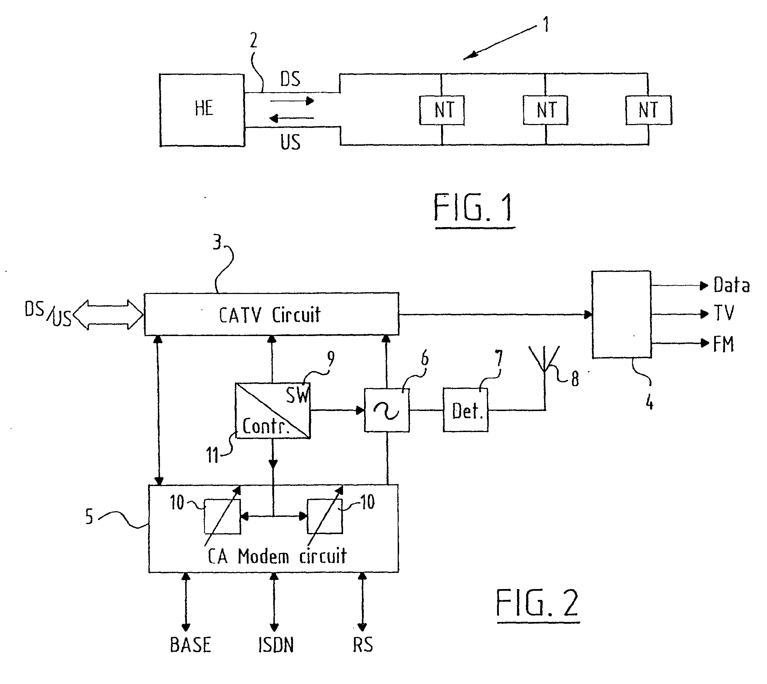

Figure 1 shows a well-known schematic structure of a communication system 1, which, in the embodiment as shown, includes a station, in the form of a Head-End HE, and several cable terminal units NT connected thereto via a bidirectional communication channel 2. In practice, several types of communication channels and stations may be arranged between the HE and the NT's. The HE transmits a (usually continuous) high data rate information flow or digital data flow in downstream (DS) direction to the NT's at a frequency of preferably more than 87 MHz, which flow eventually ends up at, for example, the radio, television, video recorder, image telephone or the like. Conversely, the NT's are individually capable of communicating data to the HE in upstream (US) direction at a lower rate in accordance with a data protocol controlled by the HE. The US data is, for example, "multiplexed" data from an ISDN source, INTERNET, ETHERNET, telephone, modem, fax, PC or a PC communication port. Our living/working environment has gradually been extended with an increasing amount of cables, terminal points and connectors, in which interference signals may be generated, which may interfere with a satisfactory reception of radio and TV signals via antennas and which may even constitute hazards for the environment, for example air traffic, that is exposed to such radiation.

Figure 2 shows the simplified structure of such an NT installed in a living or working unit, in which it is connected to a cable system coming from outside the living/working unit and which continues via the NT into the (usually screened) coaxial cabling that is generally installed in the living/working unit. In the living or working environment, several of the aforesaid data sources are connected to said cabling. The NT as shown in Figure 2 comprises a Central Antenna Television (CATV) circuit 3, which receives the DS/US data from the channel 2 or transmits said data, as the case may be. The DS data is in part fed to a data circuit 4 for providing the connections DATA, TV or FM with signals that end up at a local cable network in the living/working unit. Another part of the US data, in the frequency range of about 5-65 MHz, is fed to a Central Antenna (CA) modem circuit 5 and from there to bidirectional modem circuit connections BASE T, ISDN, RS, which open into another part of the local network. Interference is produced in the cables of said network, where they are exposed, for example, in particular at connectors, such as the connectors that are present in the various appliances, and at places where cables are extended. Said interference is also produced, for example, in the case of the so-called jamming, inter alia in amplifiers, in which the output signal thereof exhibits harmonic distortion which manifests itself in interference signals that may be present in a frequency band that is already being used.

The cable system, and in particular the NT that is shown in Figure 2, comprises means 6 which generate a recognisable test signal, which is fed to the local network in the living/working unit via the circuits 3 and/or 5 and their aforesaid connections. The NT is furthermore provided with detection means 7 for detecting interference signals generated by the local network in response to the recognisable test signal. As is shown in the figure, the detection means 7 are connected to at least one antenna 8, which receives the interference radiation and transmits it to the interference signal detector 7. In principle, said means 6 and/or 7 may also be disposed outside the NT. Preferably, they are disposed centrally within or near the NT, however.

In another possible embodiment, the NT in the cable system comprises switching means (SW) 9 connected to the test signal supplying means 6 for switching on the test signal supplying means 6 at desired points in time. Thus, the tests can be carried out at desired points in time for neighbouring living/working units , usually in succession, so as to obtain a reliable test results. Incorporated in the modem circuit 5 are controllable amplifiers 10, which may also be capable of attenuation and/or filtration and/or which also might be incorporated in the data circuit 4, by means of which amplifiers the strength of the signals present in the local network in the living/working unit can be influenced, individually if desired. The lower the strength of such a signal, the lower the level of the interference signals that will be detected. The NT furthermore comprises control means (Contr.) 11 connected to said controllable amplifiers 10, by means of which the amplification is set at the lowest interference level that is possible.

The test signal supplying means 6 are preferably so arranged that the test signal delivered by said means comprises one or more patterns exhibiting a variety of frequency components. Thus, the frequencies of the components may be attuned to that which can typically be expected with regard to interference signals in a network that is present in a room in question. Conversely, the detected interference signals are the representation of the non-linearities that are present in the network. Furthermore, the test signal can "sweep" through a frequency range that is considered to be relevant.

The present system enables easy and verifiable detection of interference sources and makes it possible to take measures against the interference that occurs or against persons or instances that cause said interference. Conversely, if said measures are not taken and the interference continues, the strength of the radio or TV signal can be reduced, for example, possibly by remote control, until the high-frequency interference problem has been remedied.

## Claims

1. A cable system comprising a local network installed in a living/working unit and to a cable terminal unit for use in said cable system, **characterized in that** the cable system furthermore comprises means for supplying a recognisable test signal to the local network, as well as detection means for detecting interference signals generated by the local network in response to said recognisable test signal.

2. A cable system according to claim 1, **characterized in that** said test signal supplying means are arranged in the living/working unit.

3. A cable system according to claim 1 or 2, **characterized in that** said detection means are arranged in the living/working unit.

4. A cable system according to any one of the claims 1-3, **characterized in that** the cable system comprises a cable terminal unit (NT) which terminates in the living/working unit, to which the test signal supplying means and/or the detection means are connected.

5. A cable system according to claim 4, **characterized in that** the test signal supplying means and/or the detection means is/are disposed in the vicinity of said cable terminal unit (NT).

6. A cable system according to any one of the claims 1-5, **characterized in that** the cable system comprises switching means connected to the test signal supplying means for switching on the test signal supplying means at desired points in time.

7. A cable system according to any one of the claims 1-6, **characterized in that** the cable system comprises control means connected to one or more controllable amplifiers incorporated in the local network, which function to influence signal levels that occur in the local network.

8. A cable terminal unit for use in the cable system according to any one of the claims 1-7, which cable system comprises a local network installed in a living/working unit, **characterized in that** said cable system furthermore includes means for supplying a recognisable test signal to the local network, as well as detection means for detecting interference signals generated by the local network in response to said recognisable test signal.

9. A method of detecting interference signals emitted by a cable system of a living/working unit, **characterized in that** a recognisable test signal is put on the cable system and that interference signals generated by the local network in response to said recognisable test signal are detected.

10. A method according to claim 9, **characterized in that** said recognisable test signal is generated in said living/working unit.

11. A method according to claim 9 or 10, **characterized in that** the interference signals generated by the local network are detected in the living/working unit.

12. A method according to any one of the claims 9-11, **characterized in that** the test signal comprises one or more patterns exhibiting a variety of frequency components.

13. A method according to any one of the claims 9-12, **characterized in that** said interference signals are high-frequency interference signals.
